# EUROPÄISCHE PATENTSCHRIFT

(11) **EP 4 208 883 B1**
(45) Veröffentlichungstag und Bekanntmachung des Hinweises auf die Patenterteilung: **20.03.2024**
(21) Anmeldenummer: 22801811.5
(22) Anmeldetag: 14.10.2022
(51) Int. Cl.: H01G 4/38, H01G 4/232, H01G 4/32

(54) **ZYLINDRISCHER KONDENSATOR**
CYLINDRICAL CAPACITOR
CONDENSATEUR CYLINDRIQUE

(30) Priorität: 29.11.2021 DE 202021106503 U; 04.01.2022 DE 202022100064 U
(43) Veröffentlichungstag der Anmeldung: 12.07.2023
(73) Patentinhaber: ELECTRONICON KONDENSATOREN GMBH, 07549 Gera (DE)
(72) Erfinder: Fischer, Patrick, 07545 Gera (DE); Geitner, Volker, 07557 Hundhaupten (DE); Stoike, Marko, 07570 Wünschendorf/Elster (DE)
(74) Vertreter: Meissner Bolte Partnerschaft mbB
(86) Internationale Anmeldenummer: PCT/EP2022/078659
(87) Internationale Veröffentlichungsnummer: WO 2023/094073

(56) Entgegenhaltungen:
- CN-B- 104 051 156
- DE-A1-102011 104 255
- DE-A1-102016 208 381
- JP-A- 2012 079 757

## Beschreibung

Die Erfindung betrifft einen zylindrischen Kondensator, bestehend aus einer Vielzahl von in Zylinderlängsachsenrichtung übereinander gestapelten zylindrischen Wicklungselementen, welche an ihren Stirnseiten elektrische Kontaktflächen aufweisen, die mit, über die Zylindermantelfläche geführten, Schaltbändern in Verbindung stehen sowie mit mindestens einem Anschlussterminal gemäß Oberbegriff des Anspruches 1.

Aus der DE 10 2018 117 283 B3 ist eine Kontaktanordnung für Stirnseiten von Kondensatorwickeln vorbekannt.

Bei der dortigen Lösung geht es primär um den lötfreien Aufbau von ein- oder mehrphasigen Becherkondensatoren, bestehend aus einem elektrisch leitfähigen Federelement mit einer Anschlussfläche für ein Schaltband und/oder einen Schalt- oder Sicherungsdraht. Die dort gezeigten Schaltbänder können aus einem Kupfer- oder Aluminiummaterial oder einem anderen elektrisch leitenden und schweißbaren Material bestehen. Das dort eingesetzte Federelement kann mit dem jeweiligen Schaltband durch Verschweißen elektrisch und mechanisch verbunden werden. Die eingesetzten Kondensatorwickel weisen stirnseitige Kontaktflächen auf, die mit dem Schaltband in Verbindung stehen. Ein derartiger Kondensator kann in ein hohlzylindrisches, becherartiges Gehäuse eingesetzt und mit einem Deckel verschlossen werden, welcher ein entsprechendes Anschlussterminal aufweist. Beispielhaft werden drei Kondensatorwickel übereinander angeordnet. Die Kondensatorwickel bestehen aus einem Dielektrikum aus Kunststofffolie und zwei entsprechenden Kontaktschichten.

Die oberen Enden der Schaltbänder sind abgewinkelt auf eine Isolierscheibe geführt. Weiterhin sind diese Enden der Schaltbänder elektrisch mit einem Schalt- oder Sicherungsdraht verbunden.

Bei dem Kondensator mit mindestens zwei Wicklungselementen nach DE 10 2018 103 166 A1 umfasst selbiger mindestens eine erste und eine zweite Sammelschiene.

Die erste Sammelschiene und die zweite Sammelschiene verbindet die dortigen, an ihren Mantelflächen nebeneinander gestapelten Wicklungselemente parallel miteinander. Die erste Sammelschiene und die zweite Sammelschiene sind so angeordnet, dass sie einander überlappen.

Ein entsprechendes Wicklungselement kann eine Kapazitätseinheit sein. Jedes Wicklungselement des bekannten Kondensators kann die gleiche Kapazität aufweisen und einen ersten Pol einer ersten Polarität und einen zweiten Pol einer zweiten Polarität besitzen. Die Sammelschiene ist als metallischer Streifen oder metallische Stange ausgebildet und wird für eine lokale Starkstromleistungsverteilung konfiguriert. Aufgrund der Überlappung der ersten oder zweiten Sammelschiene ergibt sich eine kleine Induktivität der Verbindung der Sammelschienen und zwischen den, an ihren Mantelflächen nebeneinander gestapelten Wicklungselementen des Kondensators.

Aus der CN 104766722 A ist ein Filterkondensator vorbekannt, bei dem die notwendigen elektrischen Verbindungen zwischen den Einzelkondensatoren einer Zylinderanordnung über Zylindermantelflächen-Segmente realisiert werden. Ziel ist es hier, eine möglichst niederinduktive elektrische Verbindung zu erreichen. Die erwähnten Verbindungssegmente sind als dreidimensionale Formteile zu fertigen und damit Werkzeug gebunden und müssen an die konkrete Wickelgeometrie jeweils angepasst werden. Ein universeller Einsatz in Bezug auf variable Wickelhöhen und Wickeldurchmesser sowie im Hinblick auf die Anzahl gestapelter Wickel ist bei diesem Stand der Technik nicht möglich.

Aus dem Vorgenannten ist es Aufgabe der Erfindung, einen weiterentwickelten zylindrischen Kondensator anzugeben, welcher sehr niederinduktive Eigenschaften aufweist und der einen Aufbau aus einer Parallelverschaltung mehrerer über ihre Stirnflächen gestapelter Wicklungselemente gestattet, wobei die notwendige interne Verschaltung der Wicklungselemente raumsparend und mit optimierten elektrischen Eigenschaften zu verwirklichen ist.

Die Lösung der Aufgabe der Erfindung erfolgt durch einen zylindrischen Kondensator gemäss Anspruch 1, bestehend aus einer Vielzahl von in Zylinderachsenrichtung, das heißt axial übereinander gestapelten zylindrischen Wicklungselementen, die jeweils eine Wicklungskapazität besitzen.

Die Wickelungselemente weisen an ihren Stirnseiten elektrische Kontaktflächen auf, die mit, über die Zylindermantelfläche geführten, Schaltbändern in elektrischer Verbindung stehen. Weiterhin besitzt der zylindrische Kondensator mindestens ein Anschlussterminal je Polarität.

Erfindungsgemäß sind zwei, an den Zylinderdurchmesser angepasste, im Wesentlichen kreisförmige erste und zweite Anschlussscheiben vorgesehen, welche elektrisch und mechanisch von bzw. durch ein Isolierelement getrennt sind.

Die erste und damit untere der Anschlussscheiben ist unmittelbar mit einer in Richtung Anschlussterminal liegenden Kontaktfläche eines oberen zylindrischen Wicklungselementes elektrisch verbunden.

Weiterhin sind von der ersten Anschlussscheibe ausgehend mehrere, verteilt über die Zylindermantelfläche, im Wesentlichen parallel verlaufende, erste Schaltbänder ausgebildet, welche mit einer jeweils vom Anschlussterminal wegweisenden Kontaktfläche der weiteren Wicklungselemente der Menge von Wicklungselementen verbunden sind.

Von der zweiten der Anschlussscheiben ausgehend sind mehrere, verteilt über die Zylindermantelfläche und deckungsgleich über den ersten Schaltbändern verlaufende zweite Schaltbänder ausgebildet.

Diese zweiten Schaltbänder führen zu den weiteren Kontaktflächen der übereinander gestapelten Wicklungselemente zum Zweck der elektrischen Parallelverschaltung dieser, wobei mindestens im Überdeckungsbereich von den ersten und zweiten Schaltbändern eine Isolationsschicht oder Isolationsumhüllung zwischen diesen vorgesehen ist.

Die Anschlussscheiben sind mit jeweils mindestens einem Anschlussterminal verbunden oder weisen mindestens ein integral mit ihnen ausgebildetes Anschlussterminal auf.

Die Flächenform der Schaltbänder ist im Bereich ihrer Erstreckung entlang der Zylindermantelfläche an den Zylinderradius bzw. den Zylinderumfang angepasst. Mit anderen Worten schmiegen sich die Schaltbänder an die zylindrische Umfangsfläche der jeweiligen Wicklungselemente an.

Die Schaltbänder sind bevorzugt zylinderumfangsseitig symmetrisch angeordnet, zum Beispiel in einer Zweier- oder Vierergruppe.

Weiterhin sind die Schaltbänder erfindungsgemäß als separates Bauteil ausgeführt und mit der jeweiligen Anschlussscheibe, zum Beispiel durch Verschweißen oder Verlöten, verbindbar.

Die Anschlussscheiben weisen eine im Wesentlichen identische Form und Größe auf.

Das Isolationselement besitzt bei einer Ausführungsform der Erfindung eine Kappenform oder die Form eines Deckels, wobei sich der Kappen- oder Deckelrand über einen Teilabschnitt des oberen Wicklungselementes und der dort angeschlossenen ersten Schaltbänder erstreckt.

Die Zahl der stapelbaren Wicklungselemente liegt bei einer Ausgestaltung der Erfindung im Bereich zwischen zwei und zwölf.

Die Anzahl der umfangsseitig über die Mantelfläche des Zylinders geführten, jeweils ersten oder zweiten Schaltbänder liegt zwischen zwei und sechs, bevorzugt zwischen zwei und vier.

Die ersten und die zweiten Schaltbänder sind maximal überdeckend angeordnet.

Die erfindungsgemäße Anordnung kann in bekannter Weise in einen Becher eingesetzt und mit einem integralen oder separaten Becherboden bzw. einem Becherdeckel verschlossen werden, wobei der Becherdeckel Durchbrüche zu den Anschlussterminals, die beispielsweise als Schraubterminals ausgeführt sind, besitzt.

Die Erfindung soll nachstehend anhand eines Ausführungsbeispieles sowie unter Zuhilfenahme von Figuren näher erläutert werden.

Die in den Zeichnungen und im Ausführungsbeispiel beschriebene Polarität ist beispielhaft und könnte auch in umgekehrter Weise vorliegen.

Hierbei zeigen:
- Fig. 1: einen zylindrischen Kondensator ohne Außenumhüllung mit zwei übereinander gestapelten, zylindrischen Wicklungselementen und ersten Schaltbändern, die zu einer ersten Anschlussscheibe führen;
- Fig. 2: eine Darstellung ähnlich derjenigen nach Fig. 1, jedoch mit einer im oberen Bereich des Kondensatoraufbaus angeordneten Ausbildung eines Isolierelementes;
- Fig. 3: eine Darstellung ähnlich derjenigen nach Fig. 2, jedoch mit angeordneter zweiter Anschlussscheibe mit entsprechenden Terminals, oberhalb des kappenartigen Isolierelementes; und
- Fig. 4: eine fertig ausgeführte Parallelverschaltung der zwei übereinander gestapelten zylindrischen Wicklungselemente mit den entsprechenden Anschlussterminals und dargestellter Polarität (+/-).

Der zylindrische Kondensator gemäß den figürlichen Darstellungen besteht aus z.B. zwei zylindrischen Wicklungselementen 1, die sich in einer Stapelanordnung übereinander befinden. Eine erste Anschlussscheibe 3 ist unmittelbar mit einer in Richtung Anschlussterminal 4 liegenden Kontaktfläche 5 des oberen der zylindrischen Kondensatorwickel 1 elektrisch verbunden.

Von dieser ersten Anschlussscheibe 3 ausgehend sind verteilt über die Zylindermantelfläche im Wesentlichen parallel verlaufende erste Schaltbänder 7 ausgebildet. Beim gezeigten Beispiel sind dies vier Schaltbänder 7.

Die Schaltbänder 7 sind im Bereich ihrer Erstreckung in Zylinderlängsrichtung mit einer Isolationsumhüllung 71 umgeben.

Das untere Ende der Schaltbänder 7 ist mit der vom Anschlussterminal 4 wegweisenden unteren Kontaktfläche des unteren der zylindrischen Wicklungselemente 1 elektrisch verbunden.

Die Verbindung der beiden Wicklungselemente 1 erfolgt polarisationskorrekt vom Minus-Anschlusspol des oberen Wickels zum Minus-Anschlusspol des unteren Wickels.

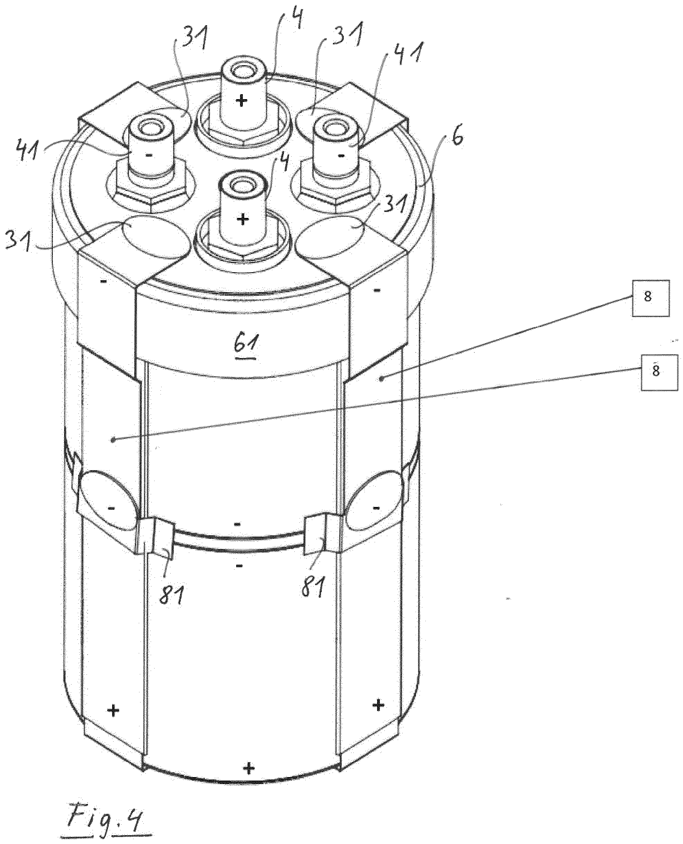

Die Kontaktflächen 9 und 10 der Wicklungselemente liegen sich im quasi mittleren Bereich der Kondensatoranordnung gegenüber und werden dort, wie in der Darstellung nach Figur 4 gezeigt, ebenfalls kontaktiert, und zwar mit weiteren, zweiten Schaltbändern 8.

Die vom Anschlussterminal 4 wegweisende Kontaktfläche des unteren Wickels 1 ist zur Unterscheidung bezüglich der Kontaktfläche des oberen Wickels mit dem Bezugszeichen 100 gekennzeichnet.

Die Schaltbänder 7 sind über die Stirnseiten der entsprechenden Wicklungselemente abgewinkelt und durch Verlöten oder Verschweißen an den Stellen 30 mit der Anschlussscheibe 3 verbunden bzw. im Bereich der unteren Kontaktfläche 100 entsprechend elektrisch kontaktiert.

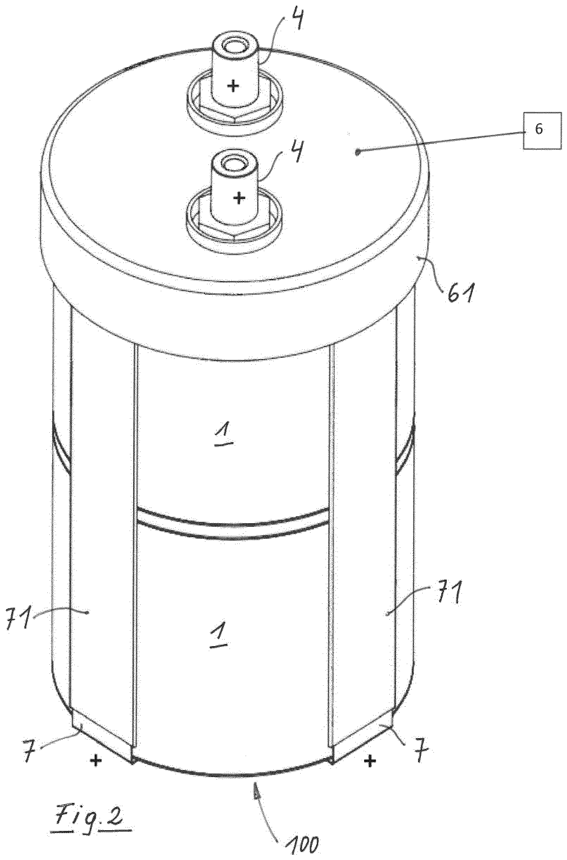

Die Darstellung nach Figur 2 zeigt nun die Anordnung eines kappenförmigen Isolierelementes 6. Dieses Isolierelement 6 dient der elektrischen Isolation der abgewinkelten Enden der Schaltbänder 7 nebst deren Verbindungsbereiche 30 mit der ersten Anschlussscheibe 3. Gleichzeitig erstreckt sich der Kappenrand 61 in Richtung Zylinderlängsachse nach unten und er bedeckt hier den oberen Abschnitt der Schaltbänder 7 sowie die Ränder der Kontaktfläche 5.

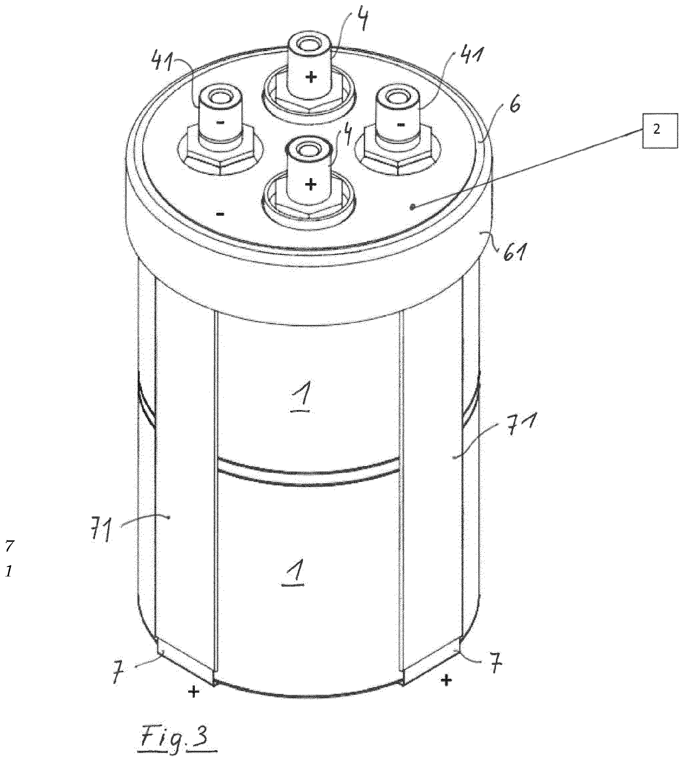

Bei der Abbildung nach Figur 3 ist oberhalb des Isolierelementes 6 mit seinem Kappenrand 61 eine zweite Anschlussscheibe 2 umfassend weitere Terminals 41 realisiert.

Zu dieser zweiten Anschlussscheibe 2 werden nun die weiteren Schaltbänder 8 geführt, die ebenfalls in Bereichen 31 die notwendige elektrische Verbindung besitzen.

Die zweite Anschlussscheibe 2 führt Plus-Polarität, was demzufolge auch für die Anschlussterminals 41 gilt.

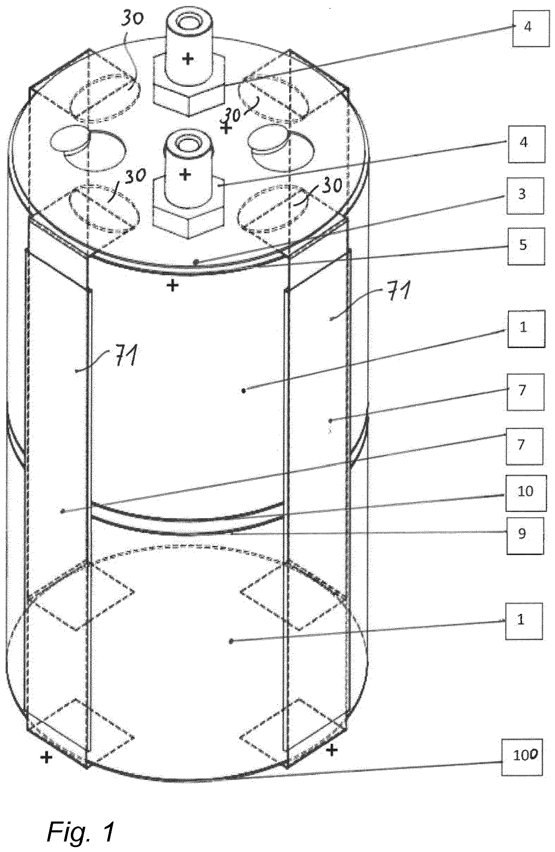

Die zweiten Schaltbänder 8 führen bis in den Mittenbereich zwischen den gestapelten Wicklungselementen 1, und zwar zu den dortigen Kontaktflächen 9 und 10 (siehe auch Figur 1). Eine entsprechende elektrische Verbindung wird z. B. mit Hilfe von elektrisch leitfähigen Winkelelementen 81 realisiert.

Die Verschaltung erfolgt hierbei so, dass sich eine elektrische Parallelschaltung der beispielhaften zwei, gestapelten zylindrischen Wicklungselemente 1 ergibt.

Gemäß Ausführungsbeispiel wird demnach ein zylindrischer Kondensator mit zwei bis zu zwölf, in Richtung der Zylinderachse gestapelten Wicklungselementen realisiert. Die Kondensatoranordnung weist eine erste und eine zweite, bevorzugt kreisförmige Anschlussscheibe auf. Diese umfassen jeweils ein oder zwei Terminals. Die Schaltbänder oder aber auch Bandleiter sind nicht integraler Bestandteil der Anschlussscheiben, sondern außenliegend an die Anschlussscheiben angeschlossen.

Eine der beiden Anschlussscheiben ist direkt mit einer ersten Kontaktfläche des oberen der Wicklungselemente verbunden.

Die sich überdeckenden und voneinander elektrisch isolierten Schaltbänder sind symmetrisch vorzugsweise in zwei- bis vierfacher Ausfertigung außenliegend verbaut und kontaktieren wechselseitig die sich berührenden oberen Kontaktflächen 9 bzw. die unteren Kontaktflächen 10 der Wicklungselemente 1. Dabei wird jede obere Kontaktfläche jedes Wicklungselementes und jede untere Kontaktfläche jedes Wicklungselementes mit jeweils einem elektrischen Potential der Anschlussscheiben wechselseitig verbunden, so dass sich die notwendige Parallelverschaltung ergibt.

Bei einem beispielhaften Aufbau hat sich gezeigt, dass der Beispielkondensator mit zwei Wickeln und einer Kapazität von ca. 500 µF bei Verwendung der beschriebenen Vielfachbandverschaltung mit sich überdeckenden Schaltbändern eine Eigeninduktivität von lediglich ca. 6,5 nH besitzt. Dies liegt deutlich unter den Werten, welche mit einer Standardverschaltung der gleichen Kondensatorwickel innerhalb eines zylindrischen Kondensators ohne sich überdeckende Schaltbänder erzielt werden können.

Bei einem Aufbau des Beispielskondensators mit gleicher Kapazität, jedoch mit vier Wickelelementen, wurden ca. 5 nH Eigeninduktivität erreicht.

## Patentansprüche

1. Zylindrischer Kondensator, bestehend aus einer Vielzahl von in Zylinderachsenrichtung übereinander gestapelten zylindrischen Wicklungselementen (1), welche an ihren Stirnseiten elektrische Kontaktflächen (5; 9; 10; 100) aufweisen, die mit über die Zylindermantelfläche geführten Schaltbändern (7; 8) in Verbindung stehen sowie mit mindestens je einem Anschlussterminal (4; 41),
**dadurch gekennzeichnet, dass**
zwei, an den Zylinderdurchmesser angepasste, im Wesentlichen kreisförmige erste und zweite Anschlussscheiben (2; 3) vorgesehen sind, welche elektrisch und mechanisch von einem Isolierelement (6) getrennt sind, wobei die erste (3) der Anschlussscheiben unmittelbar mit einer in Richtung Anschlussterminal (4; 41) liegenden Kontaktfläche (5) eines oberen zylindrischen Wicklungselementes (1) elektrisch verbunden ist, weiterhin von der ersten Anschlussscheibe (3) ausgehend mehrere, verteilt über die Zylindermantelfläche, im Wesentlichen parallel verlaufende erste Schaltbänder (7) ausgebildet sind, welche mit einer jeweils vom Anschlussterminal (4; 41) wegweisenden Kontaktfläche (100) eines weiteren Wicklungselementes (1) verbunden sind,
von der zweiten (2) der Anschlussscheiben ausgehend mehrere, verteilt über die Zylindermantelfläche, deckungsgleich über den ersten Schaltbändern (7) verlaufende zweite Schaltbänder (8) ausgebildet sind, welche zu den weiteren Kontaktflächen (9; 10) der Wicklungselemente (1) zur elektrischen Parallelverschaltung dieser führen, wobei mindestens im Überdeckungsbereich der ersten und zweiten Schaltbänder (7; 8) eine Isolationsschicht oder Isolationsumhüllung (71) vorgesehen ist.

2. Zylindrischer Kondensator nach Anspruch 1,
**dadurch gekennzeichnet, dass**
die Anschlussscheiben (2; 3) mit jeweils mindestens einem Anschlussterminal (4; 41) verbunden sind oder mindestens ein integral ausgebildetes Anschlussterminal (4; 41) aufweisen.

3. Zylindrischer Kondensator nach Anspruch 1 oder 2,
**dadurch gekennzeichnet, dass**
die Flächenform der Schaltbänder (7; 8) im Bereich ihrer Erstreckung entlang der Zylindermantelfläche an den Zylinderradius gekrümmt und dementsprechend angepasst ist.

4. Zylindrischer Kondensator nach einem der vorangegangenen Ansprüche,
**dadurch gekennzeichnet, dass**
die Schaltbänder (7; 8) zylinderumfangsseitig symmetrisch angeordnet sind.

5. Zylindrischer Kondensator nach einem der vorangegangenen Ansprüche,
**dadurch gekennzeichnet, dass**
die Schaltbänder (7; 8) als separates Bauteil ausgeführt und mit der jeweiligen Anschlussscheibe (2; 3) verbindbar sind.

6. Zylindrischer Kondensator nach einem der vorangegangenen Ansprüche,
**dadurch gekennzeichnet, dass**
die Anschlussscheiben (2; 3) eine im Wesentlichen identische Form und Größe besitzen.

7. Zylindrischer Kondensator nach einem der vorangegangenen Ansprüche,
**dadurch gekennzeichnet, dass**
das Isolationselement eine Kappenform besitzt, wobei sich der Kappenrand (61) über einen Teilabschnitt des oberen Wicklungselementes (1) und der dort angeschlossenen ersten Schaltbänder (7) erstreckt.

8. Zylindrischer Kondensator nach einem der vorangegangenen Ansprüche,
**dadurch gekennzeichnet, dass**
die Anzahl der stapelbaren Wicklungselemente (1) zwischen zwei und zwölf liegt.

9. Zylindrischer Kondensator nach einem der vorangegangenen Ansprüche,
**dadurch gekennzeichnet, dass**
die Anzahl der umfangsseitig über die Mantelfläche des Zylinders geführten, jeweils ersten oder zweiten Schaltbänder (7; 8) zwischen zwei und sechs liegt.

10. Zylindrischer Kondensator nach einem der vorangegangenen Ansprüche,
**dadurch gekennzeichnet, dass**
die ersten und die zweiten Schaltbänder (7; 8) mit maximaler Überdeckung angeordnet sind.

## Claims

1. Cylindrical capacitor, consisting of a plurality of cylindrical winding elements (1) which are stacked one above the other in the direction of the cylinder axis and have electrical contact surfaces (5; 9; 10; 100) on their end faces, which contact surfaces are connected to switching strips (7; 8) which are guided over the cylinder jacket surface, and each having at least one connection terminal (4; 41),
**characterized in that**
two substantially circular first and second connecting discs (2; 3) adapted to the cylinder diameter are provided, which are electrically and mechanically separated from an insulating element (6), wherein the first (3) of the connecting discs is directly electrically connected to a contact surface (5) located in the direction of the connecting terminal (4; 41) of an upper cylindrical winding element (1), further, starting from the first connecting disc (3), a plurality of first switching strips (7) are formed which are distributed over the cylinder jacket surface and extend substantially parallel and which are each connected to a contact surface (5) facing away from the connecting terminal (4; 41) of a further winding element (1),
starting from the second (2) of the connecting discs, a plurality of second switching strips (8) are formed which are distributed over the cylinder jacket surface and extend congruently over the first switching strips (7) and which lead to the further contact surfaces (9; 10) of the winding elements (1) for the electrical parallel connection thereof, wherein an insulating layer or insulating sheath (71) is provided at least in the overlapping region of the first and second switching strips (7; 8).

2. Cylindrical capacitor according to claim 1,
**characterized in that**
the connecting discs (2; 3) are each connected to at least one connecting terminal (4; 41) or have at least one integrally formed connecting terminal (4; 41).

3. Cylindrical capacitor according to claim 1 or 2,
**characterized in that**
the surface shape of the switching strips (7; 8) is curved to the cylinder radius in the region of their extension along the cylinder jacket surface and is adapted accordingly.

4. Cylindrical capacitor according to one of the preceding claims,
**characterized in that**
the switching bands (7; 8) are arranged symmetrically on the cylinder circumference side.

5. Cylindrical capacitor according to one of the preceding claims,
**characterized in that**
the switching bands (7; 8) are designed as a separate component and can be connected to the respective connecting disc (2; 3).

6. Cylindrical capacitor according to one of the preceding claims,
**characterized in that**
the connecting discs (2; 3) have a substantially identical shape and size.

7. Cylindrical capacitor according to one of the preceding claims,
**characterized in that**
the insulating element has a cap shape, wherein the cap edge (61) extends over a partial section of the upper winding element (1) and the first switching strips (7) connected thereto.

8. Cylindrical capacitor according to one of the preceding claims,
**characterized in that**
the number of stackable winding elements (1) is between two and twelve.

9. Cylindrical capacitor according to one of the preceding claims,
**characterized in that**
the number of the respective first or second switching bands (7; 8), which are guided circumferentially over the jacket surface of the cylinder, is between two and six.

10. Cylindrical capacitor according to one of the preceding claims,
**characterized in that**
the first and second switching bands (7; 8) are arranged with maximum overlap.

## Revendications

1. Condensateur cylindrique, constitué d'une pluralité d'éléments d'enroulement cylindriques (1) empilés les uns sur les autres dans la direction de l'axe de cylindre, qui présentent sur leurs faces frontales des surfaces de contact électriques (5 ; 9 ; 10 ; 100) qui sont en liaison avec des bandes de commutation (7 ; 8), menées sur la surface enveloppe du cylindre, ainsi qu'avec au moins une borne de connexion respective (4 ; 41),
**caractérisé en ce que**
il est prévu deux disques de connexion (2 ; 3), un premier et un deuxième, sensiblement circulaires, adaptés au diamètre du cylindre, qui sont séparés électriquement et mécaniquement d'un élément isolant (6), le premier (3) des disques de connexion étant connecté électriquement directement à une surface de contact (5), située en direction de la borne de connexion (4 ; 41), d'un élément d'enroulement cylindrique supérieur (1),
en outre, plusieurs premières bandes de commutation (7) réparties sur la surface enveloppe du cylindre et s'étendant sensiblement parallèlement sont formées à partir du premier disque de connexion (3), lesquelles sont reliées à une surface de contact (100) respective, détournée de la borne de connexion (4 ; 41), d'un autre élément d'enroulement (1),
plusieurs deuxièmes bandes de commutation (8) réparties sur la surface enveloppe du cylindre et s'étendant en coïncidence sur les premières bandes de commutation (7) sont formées à partir du deuxième (2) des disques de connexion, lesquelles mènent vers les autres surfaces de contact (9 ; 10) des éléments d'enroulement (1) pour le montage électrique en parallèle de ceux-ci, une couche d'isolation ou une enveloppe d'isolation (71) étant prévue au moins dans la zone de recouvrement des premières et deuxièmes bandes de commutation (7 ; 8).

2. Condensateur cylindrique selon la revendication 1,
**caractérisé en ce que**
les disques de connexion (2 ; 3) sont reliés chacun à au moins une borne de connexion (4 ; 41) ou présentent au moins une borne de connexion (4 ; 41) réalisée intégralement.

3. Condensateur cylindrique selon la revendication 1 ou 2,
**caractérisé en ce que** la forme de la surface des bandes de commutation (7 ; 8) est courbée et adaptée en correspondance au rayon de cylindre dans la zone de leur extension le long de la surface enveloppe du cylindre.

4. Condensateur cylindrique selon l'une des revendications précédentes,
**caractérisé en ce que**
les bandes de commutation (7 ; 8) sont disposées symétriquement sur la circonférence du cylindre.

5. Condensateur cylindrique selon l'une des revendications précédentes,
**caractérisé en ce que**
les bandes de commutation (7 ; 8) sont réalisées sous forme de composant séparé et peuvent être reliées au disque de connexion (2 ; 3) correspondant.

6. Condensateur cylindrique selon l'une des revendications précédentes,
**caractérisé en ce que**
les disques de connexion (2 ; 3) ont une forme et une taille sensiblement identiques.

7. Condensateur cylindrique selon l'une des revendications précédentes,
**caractérisé en ce que**
l'élément d'isolation a une forme de capuchon, le bord (61) du capuchon s'étendant sur une portion partielle de l'élément d'enroulement supérieur (1) et des premières bandes de commutation (7) qui y sont connectées.

8. Condensateur cylindrique selon l'une des revendications précédentes,
**caractérisé en ce que**
le nombre d'éléments d'enroulement (1) empilables est compris entre deux et douze.

9. Condensateur cylindrique selon l'une des revendications précédentes,
**caractérisé en ce que**
le nombre de premières ou deuxièmes bandes de commutation (7 ; 8) respectives menées sur la circonférence de la surface enveloppe du cylindre est compris entre deux et six.

10. Condensateur cylindrique selon l'une des revendications précédentes,
**caractérisé en ce que**
les premières et les deuxièmes bandes de commutation (7 ; 8) sont disposées avec un recouvrement maximal.
